# EUROPEAN PATENT APPLICATION

(11) **EP 4 800 687 A1**
(43) Date of publication of application: **02.09.2026**
(21) Application number: 26159974.0
(22) Date of filing: 23.02.2026
(51) Int. Cl.: G10L 17/06, G10L 17/20, G10L 17/22

(54) **SPEECH RECOGNITION METHOD AND SPEECH RECOGNITION APPARATUS**

(30) Priority: 28.02.2025 JP 2025031899
(71) Applicant: Sharp Kabushiki Kaisha, Sakai City, Osaka 590-8522 (JP)
(72) Inventor: HATA, Noriko, Osaka, 590-8522 (JP); AONO, Eri, Osaka, 590-8522 (JP)
(74) Representative: Müller Hoffmann & Partner

(57) **Abstract**

Object

The disclosure provides a speech recognition method featuring excellent speaker identification accuracy even when the speech time is short.

Resolution means

A speech recognition method of the disclosure includes: an input speech data acquisition step of acquiring input speech data; a determination step of determining whether a running time of the input speech data is longer than a threshold; and an identification step of identifying, through comparison between registered speech data of a speech of registrants registered in advance and the input speech data or processed input speech data generated by processing the input speech data, a speech of a registrant, among the registrants registered in advance, corresponding to the input speech data, wherein when the running time of the input speech data is determined to be shorter than the threshold in the determination step, processing is executed to improve identification in the identification step.

## Description

### CROSS-REFERENCE TO RELATED APPLICATION

The present application claims priority from Japanese Application JP2025-031899, the content of which is hereby incorporated by reference into this application.

### BACKGROUND

### 1. Field

The disclosure relates to a speech recognition method and a speech recognition apparatus.

### Background Art

A speaker identification method has been known in which a speaker feature vector is calculated from an input speech to perform speaker recognition (see, for example, Japanese Patent Application Laid-Open No. 2017-187642).

### SUMMARY

However, with the known speaker identification method, when the speech time is short, the speaker identification accuracy tends to be low. This presents a challenge when performing real-time transcription and speaker identification, especially in conferences with active conversations, where speech times are often short, rendering speaker identification difficult. The disclosure has been made in view of such circumstances, and provides a speech recognition method featuring excellent speaker identification accuracy even when the speech time is short.

The disclosure provides a speech recognition method comprising: an input speech data acquisition step of acquiring input speech data; a determination step of determining whether a running time of the input speech data is longer than a threshold; and an identification step of identifying, through comparison between registered speech data of speeches of registrants registered in advance and the input speech data or processed input speech data generated by processing the input speech data, a speech of a registrant, among the registrants registered in advance, corresponding to the input speech data wherein when the running time of the input speech data is determined to be shorter than the threshold in the determination step, processing is executed to improve identification in the identification step.

According to the speech recognition method of the disclosure, it is possible to perform speaker identification with excellent accuracy even when the speech time is short.

### BRIEF DESCRIPTION OF THE DRAWINGS

FIG. 1 is a flowchart of a speech recognition method according to an embodiment of the disclosure.
FIG. 2 is a block diagram illustrating a configuration of a speech recognition apparatus according to an embodiment of the disclosure.
FIG. 3 is a flowchart of a speech recognition method according to an embodiment of the disclosure.
FIG. 4 is a flowchart of a speech recognition method according to an embodiment of the disclosure.
FIG. 5 is a flowchart of a speech recognition method according to an embodiment of the disclosure.

### Description of Embodiments

A speech recognition method of the disclosure includes: an input speech data acquisition step of acquiring input speech data; a determination step of determining whether a running time of the input speech data is longer than a threshold; and an identification step of identifying, through comparison between registered speech data of speeches of registrants registered in advance and the input speech data or processed input speech data generated by processing the input speech data, a speech of a registrant, among the registrants registered in advance, corresponding to the input speech data, wherein when the running time of the input speech data is determined to be shorter than the threshold in the determination step, processing is executed to improve identification in the identification step. The speech recognition method of the disclosure may be a speaker identification method.

Preferably, the speech recognition method of the disclosure further includes a first processed input speech data generation step of generating, when the running time of the input speech data is determined to be shorter than the threshold in the determination step, first processed input speech data obtained by combining a plurality of copies of the input speech data, wherein in the identification step, through comparison between the first processed input speech data and the registered speech data, the speech of the registrant, among the registrants registered in advance, corresponding to the input speech data is identified. Preferably, in the speech recognition method of the disclosure, when the running time of the input speech data is determined to be shorter than the threshold in the determination step, in the identification step, through comparison between first registered speech data of a speech of a registrant registered in advance and the input speech data or the processed input speech data, the speech of the registrant, among the registrants registered in advance, corresponding to the input speech data is identified, and when the running time of the input speech data is determined to be longer than the threshold in the determination step, in the identification step, through comparison between second registered speech data of a speech of a registrant registered in advance and the input speech data or the processed input speech data, the speech of the registrant, among the registrants registered in advance, corresponding to the input speech data is identified.

Preferably, a second processed input speech data generation step of generating, when the running time of the input speech data is determined to be shorter than the threshold in the determination step, second processed input speech data obtained by combining the input speech data with the registered speech data is further included, wherein in the identification step, through comparison between the second processed input speech data and the registered speech data, the speech of the registrant, among the registrants registered in advance, corresponding to the input speech data is identified. Preferably, in the speech recognition method of the disclosure, in the identification step, through comparison between the second processed input speech data and the registered speech data, a speech of a registrant, among registrants registered in advance, corresponding to the second processed input speech data is identified, for each of a plurality of speech periods of different speakers, and the speaker identified as a speaker of a speech period corresponding to the input speech data is identified as the speaker of the input speech data.

The disclosure further provides a speech recognition method comprising: an input speech data acquisition step of acquiring input speech data; a determination step of determining whether a running time of the input speech data is longer than a threshold; an identification step of identifying, through comparison between registered speech data of speeches of registrants and the input speech data or processed input speech data generated by processing the input speech data, a speech of a registrant, among the registrants registered in advance, corresponding to the input speech data; and an output step of outputting a result of identifying the speech of the registrant, among the registrants registered in advance, corresponding to the input speech data. In this speech recognition method, when the running time of the input speech data is determined to be shorter than the threshold in the determination step, information indicating that a certainty of the speaker is low is output in the output step, and when the running time of the input speech data is determined to be longer than the threshold in the determination step, information indicating that the certainty of the speaker is high is output in the output step. Preferably, in the speech recognition method of the disclosure, in the identification step, through comparison between a numerical vector obtained by converting a feature of the input speech data or the processed input speech data and a numerical vector obtained by converting the registered speech data, the speech of the registrant, among the registrants registered in advance, corresponding to the input speech data is identified.

The disclosure further provides a speech recognition apparatus including: an input speech data acquirer that acquires input speech data; a determiner that determines whether a running time of the input speech data is longer than a threshold; and an identifier that identifies, through comparison between registered speech data of speeches of registrants and the input speech data or processed input speech data generated by processing the input speech data, a speech of a registrant, among the registrants registered in advance, corresponding to the input speech data, wherein when the running time of the input speech data is determined to be shorter than the threshold by the determiner, the identifier executes processing to improve identification. The speech recognition apparatus of the disclosure may be a speaker identification apparatus.

The disclosure further provides a speech recognition apparatus including: an input speech data acquirer that acquires input speech data; a determiner that determines whether a running time of the input speech data is longer than a threshold; an identifier that identifies, through comparison between registered speech data of speeches of registrants and the input speech data or processed input speech data generated by processing the input speech data, a speech of a registrant, among the registrants registered in advance, corresponding to the input speech data; and an outputter that outputs a result of identifying the speech of the registrant, among the registrants registered in advance, corresponding to the input speech data by the identifier, wherein the outputter outputs information indicating that a certainty of the speaker is low when the determiner determines that the running time of the input speech data is shorter than the threshold, and outputs information indicating that the certainty of the speaker is high when the determiner determines that the running time of the input speech data is longer than the threshold.

The disclosure will be described in more detail below with reference to a plurality of embodiments. Configurations illustrated in the drawings and the following description are examples, and the scope of the disclosure is not limited to the configurations illustrated in the drawings or the following description.

### First Embodiment

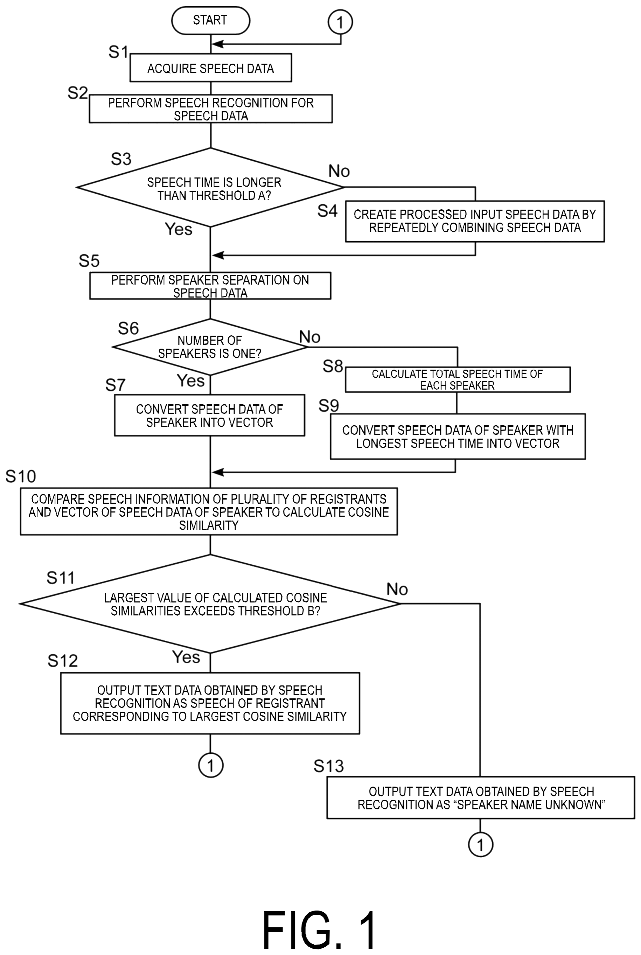

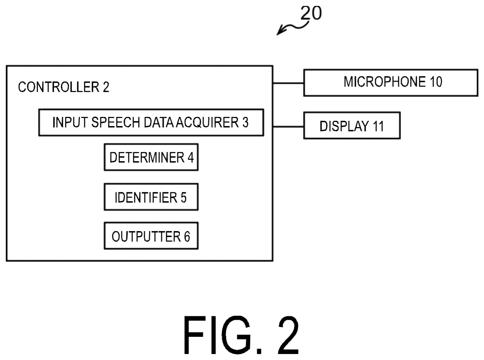

FIG. 1 is a flowchart of a speech recognition method according to a first embodiment, and FIG. 2 is a block diagram illustrating a configuration of a speech recognition apparatus. The speech recognition method of the first embodiment includes: an input speech data acquisition step (for example, step S1) of acquiring input speech data; a determination step (for example, step S3) of determining whether a running time of the input speech data is longer than a threshold; and an identification step (for example, steps S4, S7, S9, S10, S11, and the like) of identifying, through comparison between registered speech data of speeches of registrants registered in advance, and the input speech data and processed input speech data generated by processing the input speech data, a speech of a registrant, among the registrants registered in advance, corresponding to the input speech data.

When the running time of the input speech data is determined to be shorter than the threshold in the determination step (for example, step S3), processing of improving the identification in the identification step is executed. Specifically, when it is determined in the determination step (For example, step S3) that the running time of the input speech data is shorter than the threshold, a processed input speech data generation step (for example, step S4) of generating the processed input speech data by combining a plurality of copies of the input speech data is executed. In the identification step, a speech of a registrant, among the registrants registered in advance, corresponding to the processed input speech data is identified, through comparison between the processed input speech data and the registered speech data (such as, for example, steps S7, S9, S10, and S11).

The speech recognition method of the first embodiment can be implemented by, for example, a speech recognition apparatus 20 as illustrated in FIG. 2. The speech recognition apparatus 20 of the first embodiment includes: an input speech data acquirer 3 that acquires input speech data; a determiner 4 that determines whether a running time of the input speech data is longer than a threshold; and an identifier 5 that identifies, through comparison between registered speech data of a speech of registrants registered in advance and the input speech data or processed input speech data, a speech of a registrant, among the registrants registered in advance, corresponding to the input speech data, wherein when the running time of the input speech data is determined to be shorter than the threshold by the determiner 4, the identifier 5 executes processing to improve identification.

The speech recognition apparatus 20 may include a controller 2, and the input speech data acquirer 3, the determiner 4, and the identifier 5 may be programs included in the controller 2. The controller 2 may include an outputter 6. The speech recognition apparatus 20 may include a microphone 10, a display 11, an operation inputter, and the like. The speech recognition apparatus 20 may be connected to a computer in a wired or wireless manner. In this case, a monitor of the computer can be used as the display 11. The user can also input the name and the like of a speaker using the computer. The speech recognition apparatus 20 may be included in a speech recognition-based automatic minutes system, a speech recognition-based conversation recording system, or a speech-to-text system. The controller 2 can include a processor, a storage, a communicator, and the like. The processor can include, for example, at least one of a CPU, an MPU, a GPU, an NPU, and the like. The storage is a RAM, a storage, or the like. The communicator is a component provided so as to be connected to the Internet, a local area network, or the like. The controller 2 can be connected to the microphone 10 so that a speech signal output from the microphone 10 can be input. Further, the controller 2 (outputter 6) can be connected to a user interface such as the display 11 so that a recognition result of the speech recognition method of the embodiment can be output to the user interface.

A specific example of the speech recognition method of the first embodiment will be described with reference to a flowchart illustrated in FIG. 1. In step S1, the controller 2 (input speech data acquirer 3) acquires input speech data from the microphone 10 or the like. In step S1, the controller 2 may detect a speech period using voice activity detection (VAD) and acquire speech data in this speech period as input speech data. In addition, in step S1, the controller 2 may acquire, as input speech data, speech data obtained by accumulating and combining pieces of the speech data and removing silent parts. For example, the controller 2 can determine whether each piece of speech data is a silent part, and can create the input speech data by excluding the speech data of the silent part from the speech data to be combined.

In step S2, the controller 2 performs speech recognition on the input speech data, and acquires text data corresponding to the input speech data. For example, the controller 2 can execute the speech recognition processing using an AI model. When the controller 2 stores the AI model, the controller 2 can execute the speech recognition processing. Further, the controller 2 may transmit the input speech data to a server on the Internet or a local area network via the communicator, the speech recognition processing may be performed in the server, and a result thereof may be received via the communicator.

In step S3, the controller 2 (determiner 4) determines whether the speech time of the input speech data is longer than a threshold A. The threshold A may be the shortest speech time required for accurate speaker recognition. When the controller 2 (determiner 4) determines that the speech time of the input speech data is longer than the threshold A in step S3, the processing proceeds to step S5. In this case, in the subsequent steps, the input speech data is used instead of the processed input speech data.

When the controller 2 (determiner 4) determines in step S3 that the speech time of the input speech data is shorter than the threshold A, in step S4, the controller 2 (identifier 5) generates processed input speech data by combining a plurality of copies of the input speech data. For example, when the speech time of the input speech data is two seconds and four pieces of the same input speech data are combined, the processed input speech data is speech data with the same speech repeated four times, and with the speech time of eight seconds. The accuracy of speaker identification can be improved by combining a plurality of copies of the input speech data to achieve a long speech time as described above. The number of copies of the input speech data to be combined is not particularly limited, but may be, for example, the number of copies with which the processed input speech data of a speech time longer than the threshold A is achieved. After the processed input speech data is generated in step S4, the processing proceeds to step S5. In this case, the processed input speech data is used in the subsequent steps, instead of the input speech data.

In step S5, the controller 2 performs speaker separation processing on the input speech data or the processed input speech data. In the speaker separation processing, when the speech data includes only a speech of one speaker, the speech period of one speaker included in the speech data is detected, and when the speech data includes speeches of a plurality of speakers, the speech period of each speaker included in the speech data is detected. For example, when the speech data includes a speech of a speaker A, a speech of a speaker B, a speech of the speaker A, a speech of a speaker C, and a speech of the speaker B in this order, the controller 2 detects a period of the first speech of the speaker A, a period of the first speech of the speaker B, a period of the second speech of the speaker A, a period of a speech of the speaker C, and a period of the second speech of the speaker B. The controller 2 can execute the speaker separation processing using, for example, a speaker separation AI model. When the controller 2 stores the AI model, the controller 2 can execute the speaker separation processing. Further, the controller 2 may transmit the input speech data to a server on the Internet or a local area network via the communicator, the speaker separation processing may be executed in the server, and a result thereof may be received via the communicator.

In step S6, the controller 2 determines whether the number of speakers of the speech included in the input speech data or the processed input speech data is one or not. When the controller 2 determines that the number of speakers is one in step S6, the processing proceeds to step S7, and the controller 2 (identifier 5) executes processing of vectorizing the input speech data or the processed input speech data (for example, Embedding calculation). Then, the processing proceeds to step S10. When the controller 2 determines that the number of speakers is more than one in step S6, the controller 2 calculates the total speech time of each speaker included in the input speech data or the processed input speech data in step S8. Then, the processing proceeds to step S9, and the controller 2 (identifier 5) executes the processing of vectorizing the speech data of the speaker having the longest total speech time included in the input speech data or the processed input speech data (for example, Embedding calculation). Then, the processing proceeds to step S10.

In step S10, the controller 2 (identifier 5) compares the speaker information of a plurality of registrants stored in the storage with the vector of the input speech data or the vector of the processed input speech data generated in step S7 or S9, and calculates the similarity (for example, cosine similarity). The storage of the controller 2 stores speaker information of a plurality of registrants. For example, the storage of the controller 2 stores the speech data of a registrant and the vector thereof as the speaker information together with the name of the registrant. The speaker information may be stored in the storage before the speech recognition method of the embodiment is performed, or the speaker information may be stored in the storage while the speech recognition method of the embodiment is repeated.

The cosine similarity takes a value within a range of -1 to 1, and is used to calculate the relevance or similarity between pieces of vectorized speech data. Regarding the cosine similarity, similarity between the vectors of two pieces of speech data is determined to be higher, with a smaller angle between the two vectors, that is, with a value closer to 1. In step S10, for example, the controller 2 (identifier 5) compares the vector of the input speech data or the vector of the processed input speech data generated in step S7 or S9 with the vector of the speech data of each registrant stored in the storage, and calculates the cosine similarity for each registrant.

In step S11, the controller 2 (identifier 5) determines whether the largest value of all the cosine similarities calculated in step S10 exceeds the threshold B. The threshold B may be set to the smallest value of a range of the cosine similarities with which the speaker of the input speech data or the processed input speech data can be regarded as the same person as the registrant. When the controller 2 (identifier 5) determines that the largest value of all the cosine similarities exceeds the threshold B in step S11, the controller 2 (outputter 6) outputs the text data obtained by the speech recognition in step S2 as the speech of the registrant corresponding to the largest cosine similarity to the user interface such as the display 11 in step S12. Specifically, both the name of the registrant corresponding to the largest cosine similarity and the text data obtained by the speech recognition in step S2 can be displayed on the display 11. Then, the processing returns to step S1. When the flow as illustrated in FIG. 1 is repeated, the controller 2 can execute processing in steps S1 and S2 and steps S3 to S13 in parallel.

When the controller 2 (identifier 5) determines that the largest value of all the cosine similarities is smaller than the threshold B in step S11, the controller 2 (outputter 6) outputs the text data obtained by the speech recognition in step S2 as "speaker name unknown" to the user interface such as the display 11 in step S13. In this case, the user can input the name of the speaker to the controller 2, using an operation inputter such as a keyboard. When the name of the speaker is input, the controller 2 corrects the display of "speaker name unknown" on the user interface to the input name of the speaker. The controller 2 stores the input speech data acquired in step S1, the vector of the input speech data generated in step S7 or the vector of the processed input speech data generated in step S9, and the input name in the storage as speaker information. This speaker information can be used in the subsequent step S10.

### Second Embodiment

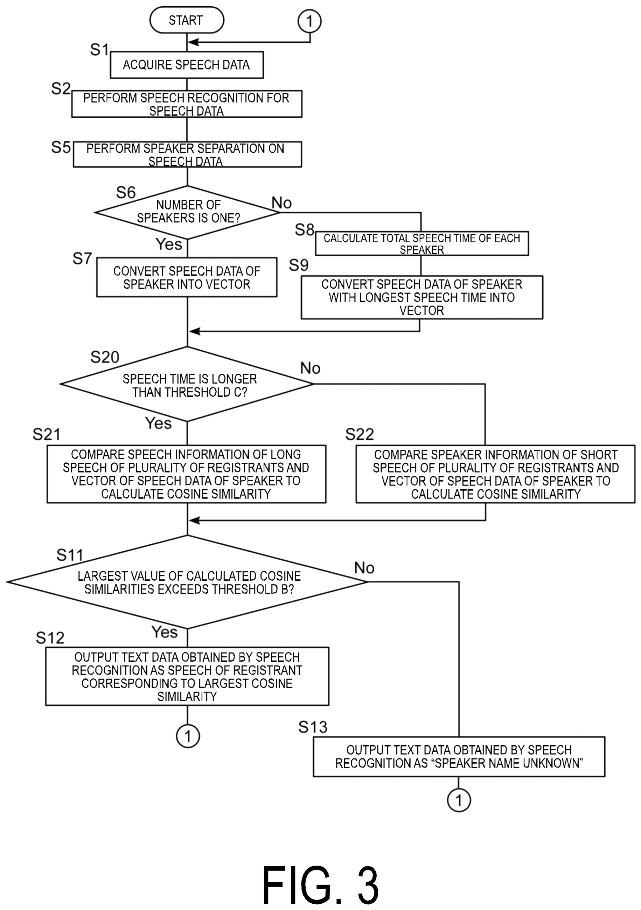

FIG. 3 is a flowchart of a speech recognition method of a second embodiment. The speech recognition method of the second embodiment is the same as the speech recognition method of the first embodiment except that steps S3 and S4 are not performed and steps S20, S21, and S22 are performed instead of step S10. In the second embodiment, the controller 2 performs steps S5, S7, S9, and the like using the input speech data acquired in step S1, and performs steps S11 and S12 using the cosine similarity calculated in step S21 or S22. In the second embodiment, step S20 is the determination step, and steps S21 and S22 are included in the identification step. Since steps S1, S2, S5 to S9, and S11 to S13 have been described in the first embodiment, the description thereof will be omitted here, and steps S20 to S22 will be mainly described.

In the second embodiment, the speaker information of each registrant stored in the storage of the controller 2 includes a vector of long speech data of a registrant, a vector of short speech data of a registrant, and a name of a registrant. The long speech data is, for example, speech data whose speech time is longer than a threshold C, and the short speech data is, for example, speech data whose speech time is shorter than the threshold C. The speaker information may be stored in the storage before the speech recognition method of the embodiment is performed, or the speaker information may be stored in the storage while the speech recognition method of the embodiment is repeated.

When the processing proceeds to step S20 from step S7 or S9, the controller 2 (determiner 4) determines whether the speech time of the input speech data acquired in step S1 is longer than the threshold C. The threshold C may be, for example, any speech time distinguishing between a relatively short speech time and a relatively long speech time. When the controller 2 (determiner 4) determines that the speech time is longer than the threshold C in step S20, the processing proceeds to step S21, and the controller 2 (identifier 5) compares the vector of the input speech data generated in step S7 or S9 with the vector of the long speech data of each registrant stored in the storage, and calculates the cosine similarity for each registrant. Then, the process proceeds to step S11, and in step S11, determination is made using the cosine similarity calculated in step S21.

When in step S20 the controller 2 (determiner 4) determines that the speech time is shorter than the threshold C, the processing proceeds to step S22, and the controller 2 (identifier 5) compares the vector of the input speech data generated in step S7 or S9 with the vector of the short speech data of each registrant stored in the storage, and calculates the cosine similarity for each registrant. Then, the process proceeds to step S11, and in step S11, determination is made using the cosine similarity calculated in step S22. In this manner, the speaker identification accuracy can be improved through comparison between the input speech data and speech data of registrants of different running times according to the speech time of the input speech data. The description of the first embodiment described above also applies to the second embodiment as long as there is no contradiction.

### Third Embodiment

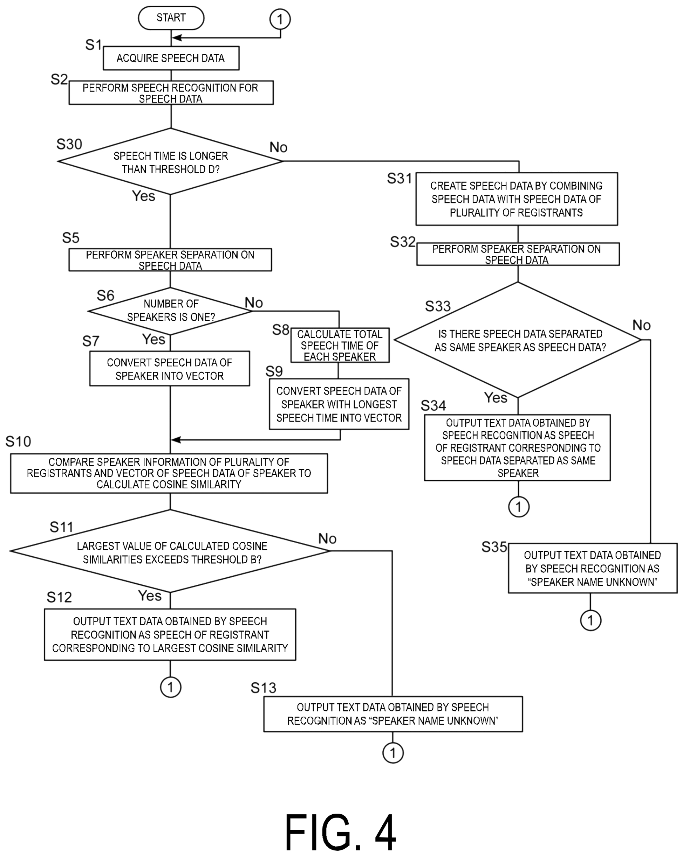

FIG. 4 is a flowchart of a speech recognition method of a third embodiment. The speech recognition method of the third embodiment is the same as the speech recognition method of the first embodiment except that steps S3 and S4 are not performed and steps S30 and S35 are performed. In the third embodiment, steps S5, S7, S9, and the like are performed using the input speech data acquired in step S1. In the third embodiment, step S30 is the determination step, and steps S31 to S33 are included in the identification step. Since steps S1, S2, S5 to S13 have been described in the first embodiment, the description thereof will be omitted here, and steps S30 to S35 will be mainly described.

After the speech recognition is performed in step S2, the processing proceeds to step S30, and the controller 2 (determiner 4) determines whether the speech time of the input speech data acquired in step S1 is longer than the threshold D. The threshold D may be the shortest speech time required for accurate speaker recognition. When the controller 2 determines in step S30 that the speech time is longer than the threshold D, the processing proceeds to step S5, and the controller 2 executes speaker separation. When the controller 2 determines in step S30 that the speech time is shorter than the threshold D, the processing proceeds to step S31.

In step S31, the controller 2 (identifier 5) combines the input speech data acquired in step S1 and the speech data of the plurality of registrants included in the speaker information stored in the storage, and creates the processed input speech data. For example, when the speech time of the input speech data acquired in step S1 is two seconds and the speech data of a registrant A of 10 seconds, the speech data of a registrant B of 10 seconds, and the speech data of a registrant C of 10 seconds are stored as the speaker information in the storage, the controller 2 creates the processed input speech data of 32 seconds as a result of combining the input speech data, the speech data of the registrant A, the speech data of the registrant B, and the speech data of the registrant C.

In step S32, the controller 2 (identifier 5) performs speaker separation processing on the processed input speech data created in step S31, and in step S33, the controller 2 (identifier 5) determines whether there is speech data separated as the same speaker as the input speech data. In the speaker separation processing, a speech period of each speaker included in the processed input speech data is detected. Since the processed input speech data includes speech data of a plurality of registrants, the speech data of the respective registrants included in the processed input speech data is expected to be detected as speech periods of different speakers. In addition, in a case where the speaker of the input speech data is a registrant, the input speech data included in the processed input speech data is expected to be detected as a speech period of the same speaker as the registrant. For example, when the controller 2 executes the speaker separation processing on the processed input speech data of 32 seconds described above, the input speech data included in the processed input speech data may be detected as a speech period of the same speaker as the speech period of any one of the registrants A, B, and C. In this case, the processing proceeds to step S34, and the controller 2 (outputter 6) outputs, to the user interface such as the display 11, the text data obtained by the speech recognition in step S2 as the speech of the registrant in the speech period detected as the same speaker as the speech period of the input speech data. Then, the processing returns to step S1.

In addition, when the speaker of the input speech data is not a registrant, in the speaker separation in step S32, a plurality of registrants are expected to be detected as speech periods of different speakers in the input speech data included in the processed input speech data. In this case, the speaker of the input speech data is expected to be none of these registrants. For example, when the controller 2 executes the speaker separation processing on the processed input speech data of 32 seconds described above, the input speech data included in the processed input speech data may be detected as a speech period of the same speaker as the speech period of a speaker different from the registrants A, B, and C. In this case, the processing proceeds to step S35, and the controller 2 (the outputter 6) outputs the text data "speaker name unknown" obtained by the speech recognition in step S2 to the user interface such as the display 11. In this case, the user can input the name of the speaker to the controller 2, using an operation inputter such as a keyboard. Then, the processing returns to step S1. The description of the first embodiment described above also applies to the third embodiment as long as there is no contradiction.

### Fourth Embodiment

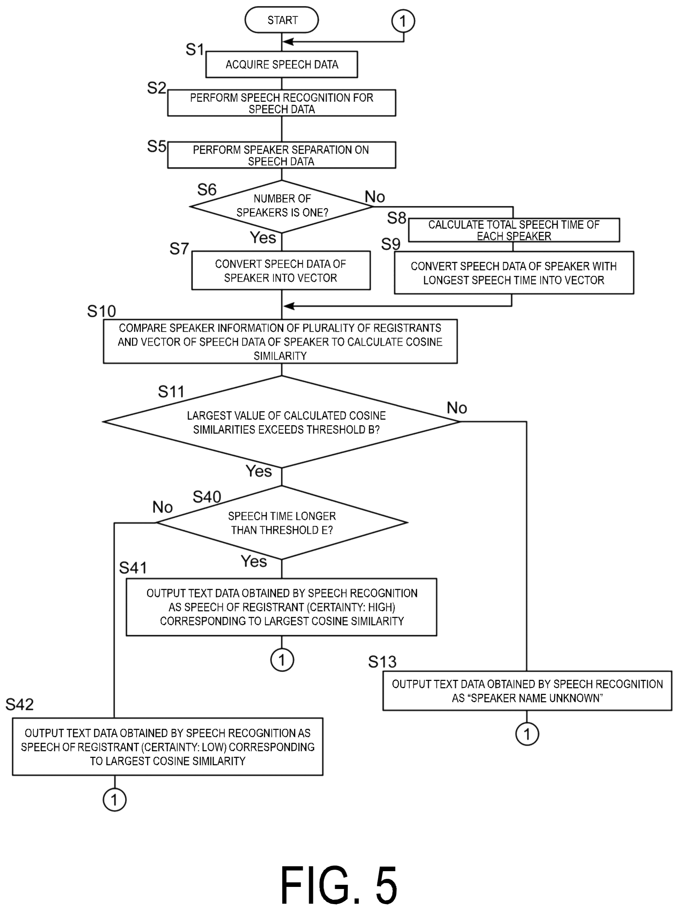

FIG. 5 is a flowchart of a speech recognition method of a fourth embodiment.

The speech recognition method of the fourth embodiment is the same as the speech recognition method of the first embodiment except that steps S3 and S4 are not performed and steps S40 to S42 are performed instead of step S12. In the fourth embodiment, steps S5, S7, S9, and the like are performed using the input speech data acquired in step S1. In the fourth embodiment, step S40 is the determination step, and steps S41 and S42 are included in the output step. Since steps S1, S2, S5 to S11, and S13 have been described in the first embodiment, the description thereof will be omitted here, and steps S40 to S42 will be mainly described.

When the controller 2 (identifier 5) determines that the largest value of all the cosine similarities exceeds the threshold B in step S11, the controller 2 (determiner 4) determines, in step S40, whether the speech time of the input speech data acquired in step S1 is longer than the threshold E. When the controller 2 determines that the speech time is longer than the threshold E in step S40, the processing proceeds to step S41, and the controller 2 (outputter 6) outputs the text data obtained by the speech recognition in step S2 as the speech of the registrant corresponding to the largest cosine similarity to the user interface such as the display 11. The controller 2 also outputs, to the user interface, information indicating that the certainty of the speech of the relevant registrant is high. Specifically, both the name of the registrant corresponding to the largest cosine similarity and the text data obtained by the speech recognition in step S2 can be displayed on the display 11. At this time, the controller 2 can display the name of the registrant and the information indicating that the certainty is high on the display 11. For example, the controller 2 may not display a question mark (?) together with the name of the registrant. Then, the processing returns to step S1.

When the controller 2 determines that the speech time is shorter than the threshold E in step S40, the processing proceeds to step S42, and the controller 2 (outputter) outputs the text data obtained by the speech recognition in step S2 as the speech of the registrant corresponding to the largest cosine similarity to the user interface such as the display 11. The controller 2 also outputs, to the user interface, information indicating that the certainty of the speech of the relevant registrant is low. Specifically, both the name of the registrant corresponding to the largest cosine similarity and the text data obtained by the speech recognition in step S2 can be displayed on the display 11. At this time, the controller 2 can display the name of the registrant and the information indicating that the certainty is low on the display 11. For example, the controller 2 may display a question mark (?) together with the name of the registrant. Then, the processing returns to step S1. The description of the first embodiment described above also applies to the fourth embodiment as long as there is no contradiction.

### Reference Signs List

2: controller 3: input speech data acquirer 4: determiner 5: identifier 6: outputter 10: microphone 11: display 20: speech recognition apparatus

## Claims

1. A speech recognition method comprising:
an input speech data acquisition step of acquiring input speech data;
a determination step of determining whether a running time of the input speech data is longer than a threshold; and
an identification step of identifying, through comparison between registered speech data of a speech of registrants registered in advance and the input speech data or processed input speech data generated by processing the input speech data, a speech of a registrant, among the registrants registered in advance, corresponding to the input speech data, wherein
when the running time of the input speech data is determined to be shorter than the threshold in the determination step, processing is executed to improve identification in the identification step.

2. The speech recognition method according to claim 1, further comprising a first processed input speech data generation step of generating, when the running time of the input speech data is determined to be shorter than the threshold in the determination step, first processed input speech data obtained by combining a plurality of copies of the input speech data, wherein
in the identification step, through comparison between the first processed input speech data and the registered speech data, the speech of the registrant, among the registrants registered in advance, corresponding to the input speech data is identified.

3. The speech recognition method according to claim 1, wherein
when the running time of the input speech data is determined to be shorter than the threshold in the determination step, in the identification step, through comparison between first registered speech data of a speech of the registrants registered in advance and the input speech data or the processed input speech data, the speech of the registrant, among the registrants registered in advance, corresponding to the input speech data is identified, and
when the running time of the input speech data is determined to be longer than the threshold in the determination step, in the identification step, through comparison between second registered speech data of speeches of the registrants registered in advance and the input speech data or the processed input speech data, the speech of the registrant, among the registrants registered in advance, corresponding to the input speech data is identified.

4. The speech recognition method according to claim 1, further comprising a second processed input speech data generation step of generating, when the running time of the input speech data is determined to be shorter than the threshold in the determination step, second processed input speech data obtained by combining the input speech data with the registered speech data, wherein
in the identification step, through comparison between the second processed input speech data and the registered speech data, the speech of the registrant, among the registrants registered in advance, corresponding to the input speech data is identified.

5. The speech recognition method according to claim 4, wherein, in the identification step, through comparison between the second processed input speech data and the registered speech data, a speech of a registrant, among registrants registered in advance, corresponding to the second processed input speech data is identified, for each of a plurality of speech periods of different speakers, and the speaker identified as a speaker of a speech period corresponding to the input speech data is identified as the speaker of the input speech data.

6. The speech recognition method according to claim 1, further comprising an output step of outputting a result of the identification step of identifying the speech of the registrant, among the registrants registered in advance, corresponding to the input speech data, wherein
when the running time of the input speech data is determined to be shorter than the threshold in the determination step, information indicating that a certainty of the speaker is low is output in the output step, and
when the running time of the input speech data is determined to be longer than the threshold in the determination step, information indicating that the certainty of the speaker is high is output in the output step.

7. The speech recognition method according to any one of claims 1 to 6, wherein in the identification step, through comparison between a numerical vector obtained by converting a feature of the input speech data or the processed input speech data and a numerical vector obtained by converting the registered speech data, the speech of the registrant, among the registrants registered in advance, corresponding to the input speech data is identified.

8. A speech recognition apparatus comprising:
an input speech data acquirer (3) that acquires input speech data;
a determiner (4) that determines whether a running time of the input speech data is longer than a threshold; and
an identifier (5) that identifies, through comparison between registered speech data of a speech of registrants registered in advance and the input speech data or processed input speech data generated by processing the input speech data, a speech of a registrant, among the registrants registered in advance, corresponding to the input speech data, wherein
when the running time of the input speech data is determined to be shorter than the threshold by the determiner (4), the identifier (5) executes processing to improve identification.

9. The speech recognition apparatus according to claim 8, further comprising an outputter (6) that outputs a result of identifying the speech of the registrant, among the registrants registered in advance, corresponding to the input speech data by the identifier (5), wherein
when the running time of the input speech data is determined to be shorter than the threshold by the determiner (4), information indicating that a certainty of the speaker is low is output by the outputter (6), and
when the running time of the input speech data is determined to be longer than the threshold by the determiner (4), information indicating that the certainty of the speaker is high is output by the outputter (6).
